# EUROPEAN PATENT APPLICATION

(11) **EP 4 664 788 A1**
(43) Date of publication of application: **17.12.2025**
(21) Application number: 23920490.2
(22) Date of filing: 09.02.2023
(51) Int. Cl.: H04B 7/185, H04W 8/22

(54) **SATELLITE COVERAGE INFORMATION ACQUISITION METHOD AND APPARATUS, DEVICE AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); SHEN, Yang, Beijing 100085 (CN)
(74) Representative: Stöckeler, Ferdinand
(86) International application number: PCT/CN2023/075301
(87) International publication number: WO 2024/164282

(57) **Abstract**

The present disclosure provides a satellite coverage information acquisition method and apparatus, a device, and a storage medium. The method comprises: in response to acquiring first indication information from a second device, determining to acquire first satellite coverage information or not acquire the first satellite coverage information on the basis of the first indication information; the first indication information is used to indicate that the second device supports acquiring the first satellite coverage information. The method of the present disclosure can successfully perform power-saving management and/or mobility management for a UE, thereby reducing power consumption.

## Description

### FIELD

The present disclosure relates to the field of communication technology, and more particularly, to a method, device and equipment for acquiring satellite coverage information, and a storage medium.

### BACKGROUND

When a user equipment (UE) accesses a satellite network, there usually exists a situation of discontinuous coverage of the satellite network, so satellite coverage information needs to be determined, so as to facilitate mobility management and/or power saving management on the UE based on the satellite coverage information.

### SUMMARY

The present disclosure provides a method, device and equipment for acquiring satellite coverage information, and a storage medium.

In a first aspect, embodiments of the present disclosure provide a method for acquiring satellite coverage information, including:
in response to acquiring first indication information from a second device, determining to acquire first satellite coverage information or not to acquire first satellite coverage information based on the first indication information; where the first indication information indicates that the second device supports acquisition of the first satellite coverage information.

In a second aspect, embodiments of the present disclosure provide a method for acquiring satellite coverage information, including:
sending first indication information to a first device, where the first indication information indicates that the second device supports acquisition of first satellite coverage information, and the first indication information is configured for the first device to determine to acquire the first satellite coverage information or not acquire the first satellite coverage information.

In a third aspect, embodiments of the present disclosure provide a communication device, including:
a processing module, configured to: in response to acquiring first indication information from a second device, determine to acquire first satellite coverage information or not to acquire first satellite coverage information based on the first indication information; where the first indication information indicates that the second device supports acquisition of the first satellite coverage information.

In a fourth aspect, embodiments of the present disclosure provide a communication device, including:
a transceiver module, configured to send first indication information to a first device, where the first indication information indicates that a second device supports acquisition of first satellite coverage information, and the first indication information is configured for the first device to determine to acquire the first satellite coverage information or not acquire the first satellite coverage information.

In a fifth aspect, embodiments of the present disclosure provide a communication device, which includes a processor. The processor, when calling computer programs in a memory, performs the method as described in the first aspect or the second aspect.

In a sixth aspect, embodiments of the present disclosure provide a communication device, which includes a processor and a memory, the memory has stored therein computer programs, and the processor is configured to execute the computer programs stored in the memory to cause the communication device to perform the method as described in the first aspect or the second aspect.

In a seventh aspect, embodiments of the present disclosure provide a communication device, which includes a processor and an interface circuit, the interface circuit is configured to receive code instructions and transmit the code instructions to the processor; and the processor is configured to run the code instructions to cause the device to perform the method as described in the first aspect or the second aspect.

In an eighth aspect, embodiments of the present disclosure provide a communication system, the system includes the communication device described in the third aspect or the fourth aspect, or the system includes the communication device described in the fifth aspect, or the system includes the communication device described in the sixth aspect, or the system includes the communication device described in the seventh aspect.

In a ninth aspect, embodiments of the present disclosure provide a computer-readable storage medium having stored therein instructions for using by the above network device, and the instructions, when executed, cause a terminal to perform the method as described in the first aspect or the second aspect.

In a tenth aspect, the present disclosure further provides a computer program product including computer programs that, when executed on a computer, cause the computer to perform the method as described in the first aspect or the second aspect.

In an eleventh aspect, the present disclosure provides a chip system, which includes at least one processor and at least one interface, for supporting a network device to implement the functions involved in the method as described in the first aspect or the second aspect, for example, determining or processing at least one of data and information involved in the above methods. In a possible design, the chip system also includes a memory for storing computer programs and data necessary for source and secondary nodes. The chip system may be composed of chips, or may include a chip and other discrete devices.

In a twelfth aspect, the present disclosure provides a computer program that, when executed on a computer, causes the computer to perform the method as described in the first aspect or the second aspect.

### BRIEF DESCRIPTION OF THE DRAWINGS

The above and/or additional aspects and advantages of present disclosure will become apparent and easily understood from the following description of embodiments with reference to the accompanying drawings, in which:
FIG. 1 is a schematic architecture diagram of a communication system according to an embodiment of the present disclosure;
FIG. 2 is a schematic flow chart of a method for acquiring satellite coverage information according to another embodiment of the present disclosure;
FIG. 3 is a schematic flow chart of a method for acquiring satellite coverage information according to another embodiment of the present disclosure;
FIG. 4 is a schematic flow chart of a method for acquiring satellite coverage information according to another embodiment of the present disclosure;
FIGs. 5a-5b are schematic flow charts of a method for acquiring satellite coverage information according to some other embodiments of the present disclosure;
FIG. 6 is a schematic flow chart of a method for acquiring satellite coverage information according to another embodiment of the present disclosure;
FIG. 7 is a schematic flow chart of a method for acquiring satellite coverage information according to another embodiment of the present disclosure;
FIG. 8 is a schematic flow chart of a method for acquiring satellite coverage information according to another embodiment of the present disclosure;
FIG. 9 is a schematic flow chart of a method for acquiring satellite coverage information according to another embodiment of the present disclosure;
FIGs. 10a-10c are schematic flow charts of a method for acquiring satellite coverage information according to some other embodiments of the present disclosure;
FIG. 11 is a schematic flow chart of a method for acquiring satellite coverage information according to another embodiment of the present disclosure;
FIG. 12 is a schematic flow chart of a method for acquiring satellite coverage information according to another embodiment of the present disclosure;
FIGs.13a-13c are schematic flow charts of a method for acquiring satellite coverage information according to some other embodiments of the present disclosure;
FIGs. 14a-14b are schematic flow charts of a method for acquiring satellite coverage information according to some other embodiments of the present disclosure;
FIGs. 15a-15b are schematic flow charts of a method for acquiring satellite coverage information according to some other embodiments of the present disclosure;
FIG. 16 is a schematic flow chart of a method for acquiring satellite coverage information according to another embodiment of the present disclosure;
FIG. 17 is a schematic flow chart of a method for acquiring satellite coverage information according to another embodiment of the present disclosure;
FIG. 18 is a schematic flow chart of a method for acquiring satellite coverage information according to another embodiment of the present disclosure;
FIG. 19 is a schematic flow chart of a method for acquiring satellite coverage information according to another embodiment of the present disclosure;
FIG. 20 is a schematic block diagram of a communication device according to another embodiment of the present disclosure;
FIG. 21 is a schematic block diagram of a communication device according to another embodiment of the present disclosure;
FIG. 22 is a schematic block diagram of a communication device according to an embodiment of the present application; and
FIG. 23 is a schematic block diagram of a chip according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present disclosure. Instead, they are examples of apparatuses and methods consistent with some aspects of embodiments of the present disclosure as recited in the appended claims.

Terms used in embodiments of the present disclosure are for the purpose of describing specific embodiments, but should not be construed to limit embodiments of the present disclosure. As used in embodiments of the present disclosure and the appended claims, "a/an", "said" and "the" in singular forms are intended to include plural forms, unless clearly indicated in the context otherwise. It should also be understood that the term "and/or" used herein represents and contains any one or any possible combinations of one or more associated items listed.

It should be understood that, although terms such as "first," "second" and "third" may be used in embodiments of the present disclosure for describing various information, these information should not be limited by these terms. These terms are used for distinguishing information of the same type from each other. For example, first information may also be referred to as second information, and similarly, the second information may also be referred to as the first information, without departing from the scope of embodiments of the present disclosure. Depending on the context, the term "if" as used herein may be construed to mean "when" or "upon" or "in response to determining".

Embodiments of the present disclosure are described in detail below, examples of which are shown in the accompanying drawings, in which the same or similar reference numerals throughout represent the same or similar elements. The embodiments described below with reference to the accompanying drawings are examples, and are intended to be used to explain the present disclosure, and should not be construed as limiting the present disclosure.

To facilitate understanding, terms involved in the present disclosure are first introduced.

### 1. Access and Mobility management Function (AMF) network element

Different mobility management requirements of terminals are supported. The following main tasks may be performed: Non-access stratum (NAS) signaling terminal; NAS signaling security; access stratum security control; signaling between core network nodes for mobility between 3rd Generation Partnership Project (3GPP) access networks; reachability of a terminal in an idle mode (including control and execution of paging retransmissions); registration area management; support for intra-system and inter-system mobility; access authentication; access authorization, including roaming-right check; mobility management control (subscription and policy); support for network slicing; session management function (SMF) selection.

The AMF network element, NAS signaling, 3GPP, and SMF mentioned above are example descriptions in the present disclosure, the present disclosure are not specifically limited to these names, and other network elements that are able to implement similar functions are also within the protection scope of the present disclosure.

### 2. Application Function (AF)

AF may be used to provide a fifth generation (5G) mobile communication system network capability for an application. The application acquires an exposure capability through an interface between the AF and a Network Exposure Function (NEF) network element.

The AF and NEF mentioned above are example descriptions in the present disclosure, the present disclosure are not specifically limited to these names, and other network elements that are able to implement similar functions are also within the protection scope of the present disclosure.

The AMF, AF, and SMF mentioned above are example descriptions in the present disclosure, the present disclosure are not specifically limited to these names, and other network elements that are able to implement similar functions are also within the protection scope of the present disclosure.

In a communication system, when a user equipment (UE) uses a satellite network, due to insufficient number of satellites in starlinks or interruption of satellite beams, signal coverage provided by satellites to the ground may be discontinuous. For example, when the UE accesses the network via a satellite in a certain area, there may exist a situation where the UE has no satellite signal coverage during a specific period. Optionally, when there is no satellite signal coverage to the UE, the UE may be managed for power saving, such as making the UE enter a power saving state (the power saving state may be for example understood as: the UE does not communicate and interact with the network device), and at the same time, making the network device postpone sending signaling/data to the UE to reduce power consumption; when the satellite signal coverage is restored, the UE may be managed for mobility, so that the UE re-establishes a connection with the network to perform communication and interaction to conduct services. Therefore, in the communication system, the UE and the network device need to determine a UE unreachability period (i.e., a period without signal coverage), so as to generate corresponding management information based on the UE unreachability period for power saving management and mobility management. Optionally, when determining the UE unreachability period, it usually needs to first acquire satellite coverage information of the satellite network at a specified location (such as a current location of the UE), and determine the UE unreachability period based on the satellite coverage information in combination with the location of the UE and/or movement trajectory of the UE.

Based on this, the present disclosure proposes a method for acquiring satellite coverage information.

In order to better understand the method for acquiring satellite coverage information disclosed in embodiments of the present disclosure, the communication system to which embodiments of the present disclosure are applicable is first described below.

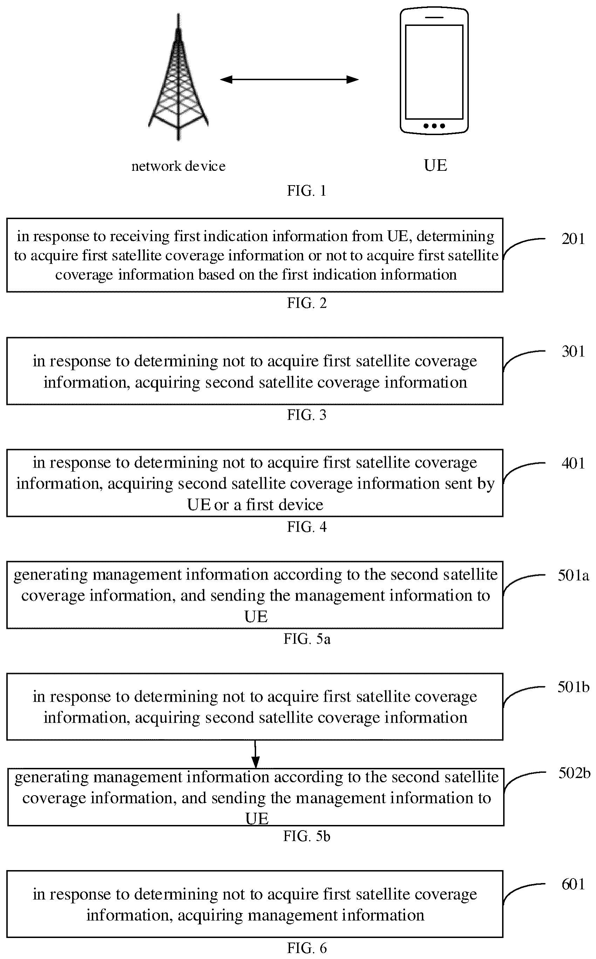

Referring to FIG. 1, FIG. 1 is a schematic architecture diagram of a communication system according to embodiments of the present disclosure. The communication system may include, but not limited to, a first device and a second device. Optionally, the first device may be a base station or a UE, and the second device may be a base station or a UE. Optionally, when the first device is a base station, the second device may be a UE; when the first device is a UE, the second device may be a base station. Optionally, the number and form of devices shown in FIG. 1 are used as an example, and do not constitute a limitation on embodiments of the present disclosure. In practice, one or more first devices or one or more second devices may be included. Optionally, as an example for illustration, the communication system shown in FIG. 1 includes one first device as a network device, or one or more second devices as one or more UEs.

It should be noted that the technical solutions of embodiments of the present disclosure are applicable to various communication systems, for example, a long term evolution (LTE) system, a 5th generation (5G) mobile communication system, a 5G new radio (NR) system, other new mobile communication systems in the future, etc.

The UE in embodiments of the present disclosure may be an entity at a user side for receiving or sending signals, such as a mobile phone. It may also be referred to as a terminal, a user equipment (UE), a mobile station (MS), a mobile terminal (MT), and so on. The UE may be a device with a communication function, such as a car, a smart car, a mobile phone, a wearable device, a tablet Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Embodiments of the present disclosure do not limit the specific technique and the specific device form adopted by the UE.

The network device in embodiments of the present disclosure may be a core network device. Optionally, the core network device may be a device deployed in the core network, and functions of the core network device are mainly to provide user connection, user management, and service carrying to provide an interface to an external network as a bearer network. For example, the core network device in the 5G NR system may include at least one of an access and mobility management function (AMF) network element, a user plane function (UPF) network element, a session management function (SMF) network element, a mobility management entity (MME), or the like.

It may be understood that the communication system described in embodiments of the present disclosure is intended to illustrate the technical solutions of embodiments of the present disclosure more clearly, and does not constitute a limitation to the technical solutions according to embodiments of the present disclosure. Those of ordinary skill in the art will know that with the evolution of the system architecture and the emergence of new service scenarios, the technical solutions according to embodiments of the present disclosure are also applicable to similar technical problems.

It may be understood that the communication system described in embodiments of the present disclosure is intended to illustrate the technical solutions of embodiments of the present disclosure more clearly, and does not constitute a limitation to the technical solutions according to embodiments of the present disclosure. Those of ordinary skill in the art will know that with the evolution of the system architecture and the emergence of new service scenarios, the technical solutions according to embodiments of the present disclosure are also applicable to similar technical problems.

The method, device and equipment for acquiring satellite coverage information as well as the storage medium according to embodiments of the present disclosure will be described in detail below with reference to the accompanying drawings.

It should be noted that in the present disclosure, in absence of contradiction, each step in any embodiment or example may be implemented as an independent embodiment, and the various steps may be arbitrarily combined. For example, a scheme obtained by removing some steps from a certain embodiment or example may also be implemented as an independent example, and the order of the steps in a certain embodiment or example may be arbitrarily exchanged. In addition, optional manners or optional examples in a certain embodiment or implementation may be arbitrarily combined. With regard to the expressions in the present disclosure like "A or B", "A and/or B", "at least one of A or B", "A in a case, B in another case", or "A in response to a case, B in response to another case", at least one of the following schemes may be included depending on situations: A is executed independently of B, i.e., A in some implementations; B is executed independently of A, i.e., B in some implementations; A and B are selectively executed, i.e., A and B are selectively executed in some implementations; A and B are both executed, i.e., both A and B in some implementations. In addition, various embodiments or examples may be arbitrarily combined, for example, some or all steps of different embodiments or examples may be arbitrarily combined, and a certain embodiment or implementation may be arbitrarily combined with optional manners or optional examples of other embodiments or implementations. In addition, each element, each row, or each column in the table involved in the present disclosure may be implemented as an independent embodiment, and the combination of any elements, any rows, and any columns may also be implemented as an independent embodiment.

FIG. 2 is a schematic flow chart of a method for acquiring satellite coverage information according to embodiments of the present disclosure, and the method is performed by a network device. As shown in FIG. 2, the method for acquiring satellite coverage information may include a following step.

Step 201, in response to receiving first indication information from a UE, it is determined to acquire first satellite coverage information or not to acquire first satellite coverage information based on the first indication information.

Optionally, in an embodiment of the present disclosure, the network device may include at least one of:
AMF;
SMF; or
MME.

Optionally, in an embodiment of the present disclosure, the first indication information may be configured to indicate a capability of the UE, and the capability of the UE may include: a capability of the UE to acquire the first satellite coverage information.

Optionally, in an embodiment of the present disclosure, the network device may determine to acquire the first satellite coverage information or not to acquire the first satellite coverage information based on the first indication information and/or a capability of the network device. Optionally, the capability of the network device may include: a capability of the network device to acquire at least one of the first satellite coverage information or second satellite coverage information.

Optionally, in an embodiment of the present disclosure, the first satellite coverage information may indicate a satellite signal coverage condition of a satellite network, for example, the first satellite coverage information may be used to indicate at least one of: a satellite signal coverage condition of a satellite network currently accessed by the UE or a satellite signal coverage condition of at least one available satellite network. Optionally, the first satellite coverage information may include at least one of: third indication information for indicating a satellite signal coverage range of the satellite network (such as the satellite network currently accessed by the UE, and/or at least one available satellite network) at each time point, fourth indication information for indicating whether the satellite network has satellite signal coverage to a specified location at each time point and/or a specified time point, etc., and the specified location may be, for example, a current location of the UE, or a location of the UE at a future moment. Optionally, "the first satellite coverage information" mentioned in embodiments of the present disclosure is used as an example name in the present disclosure, and may also be expressed in other words, which is not limited by the present disclosure.

Optionally, in an embodiment of the present disclosure, the method of "determining to acquire the first satellite coverage information or not to acquire the first satellite coverage information" may include at least one of:
in response to the UE supporting acquisition of the first satellite coverage information and the network device not supporting acquisition of the first satellite coverage information, the network device determines not to acquire the first satellite coverage information;
in response to the UE not supporting acquisition of the first satellite coverage information and the network device supporting acquisition of the first satellite coverage information, the network device determines to acquire the first satellite coverage information;
in response to the UE supporting acquisition of the first satellite coverage information and the network device supporting acquisition of the first satellite coverage information, the network device determines to acquire the first satellite coverage information or not to acquire the first satellite coverage information.

Optionally, in an embodiment of the present disclosure, in response to determining to acquire the first satellite coverage information, the network device may acquire the first satellite coverage information. For example, in an embodiment of the present disclosure, the network device may acquire the first satellite coverage information from a third device (such as an AF and/or a management server responsible for satellite operation information). For example, the network device may send a first request message to the third device, and the first request message may be used to request the acquisition of the first satellite coverage information. After that the third device may send the first satellite coverage information to the UE. In another embodiment of the present disclosure, the network device may acquire the first satellite coverage information from the UE.

Optionally, in an embodiment of the present disclosure, after the network device acquires the first satellite coverage information, the network device may determine the second satellite coverage information based on at least one of the first satellite coverage information, a UE location, or a UE movement trajectory, generate management information based on the second satellite coverage information, and send the management information to the UE.

Optionally, in an embodiment of the present disclosure, the UE location may be requested and acquired by the network device from the UE or an access network device (such as a base station), and the UE movement trajectory may be requested and acquired by the network device from Network Data Analytics Function (NWDAF). Optionally, illustration is made with reference to an example where the network device requests and acquires the UE movement trajectory from the NWDAF, the method for the network device to request and acquire the UE location is similar. For example, the network device may send a second request message to the NWDAF, and the second request message is used to request to acquire the UE movement trajectory. After that, the NWDAF will send the UE movement trajectory to the network device.

Optionally, in an embodiment of the present disclosure, the second satellite coverage information may be used to indicate a satellite signal coverage condition of the UE. Optionally, the second satellite coverage information may indicate a satellite coverage condition of the UE at a specified location. For example, in an embodiment of the present disclosure, the second satellite coverage information may indicate coverage information of the UE at the current location. Optionally, in an embodiment of the present disclosure, the second satellite coverage information may include, for example, at least one of: a time of satellite signal coverage to the UE; a duration of satellite signal coverage to the UE; a time of no satellite signal coverage to the UE; or a duration of no satellite signal coverage to the UE. In some embodiments, the second satellite coverage information may be satellite coverage information associated with the UE.

Optionally, in an embodiment of the present disclosure, the management information may be used to manage the UE to maintain different states under different satellite signal coverage conditions of the UE. Optionally, in an embodiment of the present disclosure, the management information may be used for power saving management on the UE when there is no satellite signal coverage to the UE, and for mobility management on the UE during the satellite signal coverage to the UE. Optionally, the power saving management may be understood for example as: managing the UE to remain in a power saving state when there is no satellite signal coverage; and the mobility management may be understood for example as: waking up the UE from the power saving state to a network connection state during a period with the satellite signal coverage. For example, in an embodiment of the present disclosure, the management information may be used to: manage the UE to without the power saving state when there is no satellite signal coverage, and to maintain the network connection state during the satellite signal coverage. Optionally, in some embodiments, the management information may be "power saving parameter and duration of a non-access stratum (NAS) timer".

Optionally, "the second satellite coverage information and the management information" mentioned in embodiments of the present disclosure are used as example names in the present disclosure, and may also be expressed in other words, which are not limited by the present disclosure.

Optionally, in an embodiment of the present disclosure, the management information may include at least one of:
an extended discontinuous reception (eDRX) parameter in a connection management idle state (CM-IDLE);
a parameter for configuring a mobile initiated connection only (MICO) mode;
a parameter for configuring a power saving mode (PSM); or
a duration of a periodic registration timer.

Optionally, in an embodiment of the present disclosure, the above eDRX parameter includes an eDRX period and a paging time window (PTW), and the eDRX period and the PTW may be set based on the second satellite coverage information. Optionally, in a case where the UE is configured with the eDRX parameter, the UE will enter the power saving state based on the eDRX period and the PTW. For example, within the PTW of each eDRX period, the UE may be paged by the network device to restore the connection to conduct services, and the UE is in the power saving state and does not conduct services at other times.

Optionally, in an embodiment of the present disclosure, the above parameter for configuring the MICO mode may include an activation time, the activation time may be set based on the second satellite coverage information, and the activation time may include the time of satellite signal coverage to the UE. Optionally, in a case where the UE is configured with the activation time, within the activation time, the UE may be paged by the network device and communicate with the network device to conduct services, and the UE remains in the power saving state during the rest of the time.

Optionally, in an embodiment of the present disclosure, the above parameter for configuring the PSM state may include an activation time and a periodic Tracking Area Update (TAU) timer, the activation time and the TAU timer may be set according to the second satellite coverage information, the activation time may include a time of satellite signal coverage to the UE, and a duration of the TAU timer may include a time of no satellite signal coverage to the UE. Optionally, in a case where the UE is configured with the activation time and the TAU timer, within the activation time, the UE may be paged by the network device and communication with the network device to conduct services. At the end of the activation time, the periodic TAU timer is started, and during the operation of the periodic TAU timer, the terminal is in the power saving state and does not conduct services. When the periodic TAU timer expires, it is considered that the terminal enters the activation time again. At this time, the UE may be paged by the network device and communication with the network device to conduct services.

Optionally, in an embodiment of the present disclosure, the above periodic registration timer may be configured in a such way that when the UE begins to enter no signal coverage, the periodic registration timer is started, during the operation of the periodic registration timer, the UE is in the power saving state and does not communicate or interact with the network device, when the periodic registration timer expires, the UE requests a registration update to the network device to establish a communication connection.

From the above contents, it can be known that the power saving management (for example, it may be: managing UE to enter the power saving state) and the mobility management (for example, it may be: changing the UE from the power saving state to the network connection state through registration update message) of UE may be realized based on the management information.

Optionally, in another embodiment of the present disclosure, in response to determining not to acquire the first satellite coverage information, the network device may acquire the second satellite coverage information or management information. Optionally, the network device may determine to acquire the second satellite coverage information or the management information based on whether it supports acquisition of the second satellite coverage information. For example, in a case where the network device determines not to acquire the first satellite coverage information, if the network device supports acquisition of the second satellite coverage information, the network device determine to acquire the second satellite coverage information; if the network device does not support acquisition of the second satellite coverage information, the network device determines to acquire the management information.

Optionally, in an embodiment of the present disclosure, the method for the network device to acquire the second satellite coverage information may include that the network device acquires the second satellite coverage information from the UE and/or a third device. For example, the network device may send a third request message to the UE and/or the third device, and the third request message is used to request the acquisition of the second satellite coverage information. Optionally, when the UE receives the third request message, the UE may first acquire the first satellite coverage information, for example from the third device, determine the second satellite coverage information based on at least one of the first satellite coverage information, the UE location, or the UE movement trajectory, and then send the second satellite coverage information to the network device. Optionally, when the third device receives the third request message, the third device may first determine the first satellite coverage information, determine the second satellite coverage information based on at least one of the first satellite coverage information, the UE location, or the UE movement trajectory, and then send the second satellite coverage information to the network device. Optionally, in an embodiment of the present disclosure, after the network device acquires the second satellite coverage information, it may generate management information based on the second satellite coverage information, and send the management information to the UE, so as to implement power saving management and/or mobility management of the UE based on the management information. Optionally, in another embodiment of the present disclosure, the method for the network device to acquire the second satellite coverage information may include that: the network device does not request the second satellite coverage information from the UE, but waits to receive the second satellite coverage information sent by the UE. At this time, it is considered that the UE side determines to acquire the first satellite coverage information by itself.

Optionally, in an embodiment of the present disclosure, the method for the network device to acquire the management information may include that: the network device requests acquisition of the management information from the UE. For example, the network device may send a fourth request message to the UE, and the fourth request message is used to request acquisition of the management information. Optionally, when the UE receives the fourth request message, the UE may first acquire the first satellite coverage information, for example from the third device, determine the second satellite coverage information based on at least one of the first satellite coverage information, the UE location, or the UE movement trajectory, and then generate the management information based on the second satellite coverage information, and send the management information to the network device. Optionally, in an embodiment of the present disclosure, after the network device acquires the management information, it may authorize the management information, and send the authorized management information to the UE after approval of authorization.

It can be seen from the foregoing that in an embodiment of the present disclosure, the network device side will decide whether to acquire the first satellite coverage information, the second satellite coverage information or the third satellite coverage information itself, and then determine the management information based on the decision result, so as to perform power saving management and/or mobility management on the UE.

Optionally, in an embodiment of the present disclosure, the UE side will also decide whether to acquire the first satellite coverage information itself or not, and then determine the management information based on the decision result.

Optionally, in an embodiment of the present disclosure, in a case where the UE decides to acquire the first satellite coverage information itself, the UE may acquire the first satellite coverage information (for example from a third device), and send the first satellite coverage information to the network device, so that the network device is able to finally generate the management information based on the first satellite coverage information. In another embodiment of the present disclosure, in a case where the UE decides to acquire the first satellite coverage information itself, the UE may acquire the first satellite coverage information (for example from a third device), generate the second satellite coverage information based on at least one of the first satellite coverage information, the UE location or the UE movement trajectory, and send the second satellite coverage information to the network device, so that the network device is able to finally generate the management information based on the second satellite coverage information. In another embodiment of the present disclosure, in a case where the UE decides to acquire the first satellite coverage information itself, the UE may acquire the first satellite coverage information (for example from a third device), generate the second satellite coverage information based on at least one of the first satellite coverage information, the UE location or the UE movement trajectory, generate the management information based on the second satellite coverage information, and send the management information to the network device, to make the network device authorize the management information.

Optionally, in an embodiment of the present disclosure, in a case where the UE decides not to acquire the first satellite coverage information, the UE may acquire management information from the network device. For example, the UE may send a fifth request message to the network device, and the fifth request message may be used to request the management information. When the network device receives the fifth request message, the network device may acquire the first satellite coverage information from a third device, generate the second satellite coverage information based on at least one of the first satellite coverage information, the UE location or the UE movement trajectory, generate management information based on the second satellite coverage information, and send the management information to the UE. Alternatively, when the network device receives the fifth request message, the network device may acquire the second satellite coverage information from the third device, generate management information based on the second satellite coverage information, and send the management information to the UE.

However, it should be noted that in an embodiment of the present disclosure, the UE and the network device will not interact with each other with regard to their decision results. That is, after the network device and the UE each decide to acquire the first satellite coverage information or not acquire the first satellite coverage information, they will not notify each other, but will directly perform subsequent operations corresponding to "acquiring the first satellite coverage information" or directly perform subsequent operations corresponding to "not acquiring the first satellite coverage information". As a result, a scenario where "the UE's decision causes the UE to generate management information and send the management information to the network device (for example, the UE decides to acquire the first satellite coverage information itself, and finally generates the management information based on the first satellite coverage information, and sends the management information to the network device), and at the same time, the network device's decision causes the network device also to generate management information and send the management information to the UE (for example, the network device decides to acquire the first satellite coverage information itself, and finally generates the management information based on the first satellite coverage information, and sends the management information to the UE)" may occur; or a scenario where "the UE's decision causes the UE not to generate management information (for example, the UE decides to acquire the management information), and at the same time, the network device's decision causes the network device not to generate management information (for example, the network device decides to acquire the management information), either" may occur.

Optionally, in an embodiment of the present disclosure, when the scenario where "the UE's decision causes the UE to generate management information and send the management information to the network device, and at the same time, the network device's decision causes the network device also to generate management information and send the management information to the UE" occurs, a usage priority of the management information generated by the network device is higher than a usage priority of the management information generated by the UE. For example, assuming that the network device receives the management information sent by the UE, and the network device itself also generates the management information, the network device preferentially uses the management information generated by itself to perform mobility management and/or power saving management on the UE. Alternatively, assuming that the UE receives the management information sent by the network device, and the UE itself also generates the management information, the UE preferentially uses the management information sent by the network device to perform mobility management and/or power saving management.

Optionally, in an embodiment of the present disclosure, when the scenario where "the UE's decision causes the UE not to generate management information, and at the same time, the network device's decision causes the network device not to generate management information, either" occurs, if the network device does not receive the management information from the UE within a first preset time, the network device changes the decision to determine to acquire the first satellite coverage information by itself; if the UE does not receive the management information from the network device within a second preset time, the UE will also change the decision to determine to acquire the first satellite coverage information by itself, thereby ensuring the successful generation of the management information. Optionally, the first preset time may be the same as or different from the second preset time.

Optionally, the above embodiments are examples of some embodiments, and should not be used as limitations on the protection scope of embodiments of the present disclosure. In the absence of contradiction, each step in a certain embodiment or example may be implemented as an independent embodiment, and the steps may be arbitrarily combined. For example, a scheme obtained by removing some steps from a certain embodiment or example may also be implemented as an independent embodiment, and the order of the steps in a certain embodiment or example may be arbitrarily exchanged. In addition, optional manners or optional examples in a certain embodiment or implementation may be arbitrarily combined; in addition, various embodiments or examples may be arbitrarily combined, for example, some or all of the steps of different embodiments or examples may be arbitrarily combined, and a certain embodiment or implementation may be arbitrarily combined with optional manners or optional examples of other embodiments or implementations. In addition, each element, each row, or each column in the table involved in the present disclosure may be implemented as an independent embodiment, and the combination of any elements, any rows, and any columns may also be implemented as an independent embodiment.

To sum up, in the method for acquiring satellite coverage information provided by embodiments of the present disclosure, the network device will receive the first indication information sent by the UE, and the first indication information indicates that the UE supports the acquisition of the first satellite coverage information. After that, the network device may determine to acquire the first satellite coverage information or not to acquire the first satellite coverage information based on the first indication information. It can be seen that in the method of the present disclosure, when the network device determines to acquire or not to acquire the first satellite coverage information, it is determined based on the capability of the UE to acquire the first satellite coverage information, which can ensure the accuracy of the determination result, that is, ensure the network device to accurately determine to acquire or not to acquire the first satellite coverage information, so that the management information may be acquired subsequently in a corresponding manner based on the determination result, so as to successfully perform power saving management and/or mobility management on the UE, thereby reducing power consumption.

FIG. 3 is a schematic flow chart of a method for acquiring satellite coverage information according to an embodiment of the present disclosure, and the method is performed by a network device. As shown in FIG. 3, the method for acquiring satellite coverage information may include a following step.

Step 301, in response to determining not to acquire the first satellite coverage information, second satellite coverage information is acquired.

For the introduction of step 301, reference may be made to the description of step 201 above.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the network device determines that the network device acquires the second satellite coverage information, so that the network device may subsequently generate management information based on the second satellite coverage information, so as to successfully perform power saving management and/or mobility management on the UE based on the management information, thereby reducing power consumption.

FIG. 4 is a schematic flow chart of a method for acquiring satellite coverage information according to an embodiment of the present disclosure, and the method is performed by a network device. As shown in FIG. 4, the method for acquiring satellite coverage information may include a following step.

Step 401, in response to determining not to acquire the first satellite coverage information, second satellite coverage information sent by a UE or a third device is acquired.

For the introduction of step 401, reference may be made to the description of step 201 above.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the network device determines that the network device acquires the second satellite coverage information from the UE or the third device, so that the network device may subsequently generate management information based on the second satellite coverage information, so as to successfully perform power saving management and/or mobility management on the UE based on the management information, thereby reducing power consumption.

FIG. 5a is a schematic flow chart of a method for acquiring satellite coverage information according to an embodiment of the present disclosure, and the method is performed by a network device. As shown in FIG. 5a, the method for acquiring satellite coverage information may include a following step.

Step 501a, management information is generated according to the second satellite coverage information, and the management information is sent to the UE.

For the introduction of step 501a, reference may be made to the description of step 201 above.

Optionally, optional examples in embodiments of the present disclosure may be combined arbitrarily, and any embodiment of the present disclosure may be combined with the steps of other embodiments or the optional examples in other embodiments without contradiction_{∘}

To sum up, in the method for acquiring satellite coverage information according to embodiments of the present disclosure, after the network device acquires the second satellite coverage information, the network device may generate the management information based on the second satellite coverage information, and send the management information to the UE, so as to successfully perform power saving management and/or mobility management on the UE based on the management information, thereby reducing power consumption.

FIG. 5b is a schematic flow chart of a method for acquiring satellite coverage information according to an embodiment of the present disclosure, and the method is performed by a network device. As shown in FIG. 5b, the method for acquiring satellite coverage information may include the following steps.

Step 501b, in response to determining not to acquire the first satellite coverage information, second satellite coverage information is acquired.

Step 501b, management information is generated according to the second satellite coverage information, and the management information is sent to the UE.

For the introduction of steps 501a-501b, reference may be made to the description of step 201 above.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, after the network device acquires the second satellite coverage information, the network device may generate the management information based on the second satellite coverage information, and send the management information to the UE, so as to successfully perform power saving management and/or mobility management on the UE based on the management information, thereby reducing power consumption.

FIG. 6 is a schematic flow chart of a method for acquiring satellite coverage information according to an embodiment of the present disclosure, and the method is performed by a network device. As shown in FIG. 6, the method for acquiring satellite coverage information may include a following step.

Step 601, in response to determining not to acquire the first satellite coverage information, management information is acquired.

For the introduction of step 601, reference may be made to the description of step 201 above.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the network device determines that the network device acquires the management information, so that the network device may authorize the acquired management information and successfully perform power saving management and/or mobility management on the UE based on the authorized management information, thereby reducing power consumption.

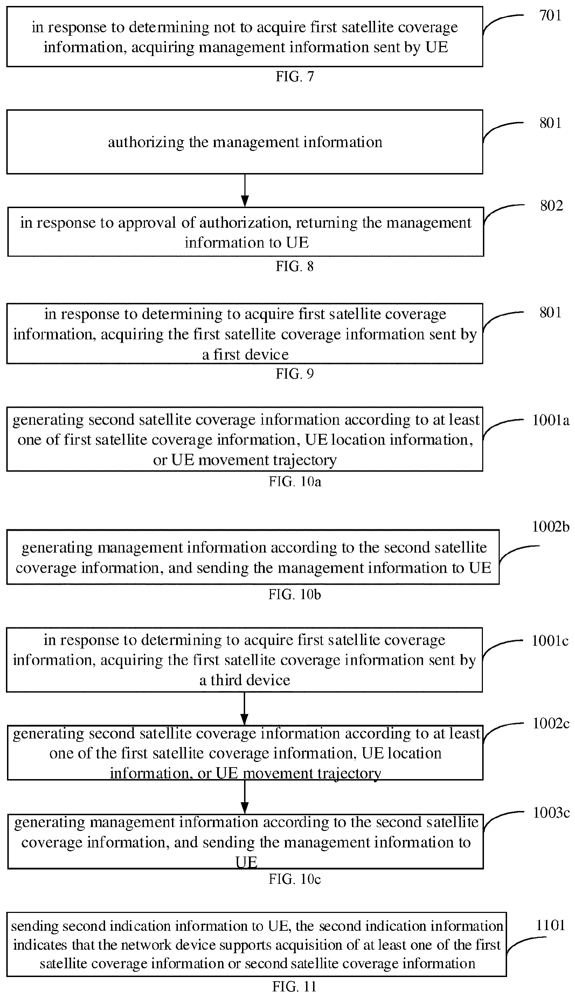

FIG. 7 is a schematic flow chart of a method for acquiring satellite coverage information according to an embodiment of the present disclosure, and the method is performed by a network device. As shown in FIG. 7, the method for acquiring satellite coverage information may include a following step.

Step 701, in response to determining not to acquire first satellite coverage information, management information sent by UE is acquired.

For the introduction of step 701, reference may be made to the description of step 201 above.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the network device determines that the network device acquires the management information from the UE, so that the network device may authorize the acquired management information and successfully perform power saving management and/or mobility management on the UE based on the authorized management information, thereby reducing power consumption.

FIG. 8 is a schematic flow chart of a method for acquiring satellite coverage information according to an embodiment of the present disclosure, and the method is performed by a network device. As shown in FIG. 8, the method for acquiring satellite coverage information may include the following steps.

Step 801: the management information is authorized.

Optionally, in an embodiment of the present disclosure, the above-mentioned "authorizing the management information" may be understood as: authorizing the management information to be used for mobility management and/or power saving management on the UE. That is, after approval of authorization, the UE may enter the power saving state and/or change from the power saving state to the network connection state based on the authorized management information.

Step 802, in response to approval of authorization, the management information is returned to the UE.

Optionally, in an embodiment of the present disclosure, the management information authorized by the network device may be the same as or different from the management information sent by the UE to the network device.

For more detailed description of step 801, reference may be made to the description of step 201 above.

Optionally, in embodiments or examples of the present disclosure, in the absence of contradiction, individual steps may be implemented independently, may be arbitrarily combined, or may be exchanged in order, and optional manners or optional examples may be arbitrarily combined and may be arbitrarily combined with other embodiments or examples.

To sum up, in the method for acquiring satellite coverage information according to embodiments of the present disclosure, after the network device acquires the management information, it may authorize the acquired management information and return the authorized management information to the UE, so as to successfully perform power saving management and/or mobility management on the UE based on the authorized management information, thereby reducing power consumption.

FIG. 9 is a schematic flow chart of a method for acquiring satellite coverage information according to an embodiment of the present disclosure, and the method is performed by a network device. As shown in FIG. 9, the method for acquiring satellite coverage information may include a following step.

Step 901, in response to determining to acquire first satellite coverage information, the first satellite coverage information sent by a third device is acquired.

For more detailed description of step 901, reference may be made to the description of step 201 above.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, in response to the network device determining to acquire the first satellite coverage information, the network device will acquire the first satellite coverage information from the third device, so that the network device may finally generate management information based on the acquired first satellite coverage information, and send the management information to the UE, thereby successfully realizing power saving management and/or mobility management on the UE, and reducing power consumption.

FIG. 10a is a schematic flow chart of a method for acquiring satellite coverage information according to an embodiment of the present disclosure, and the method is performed by a network device. As shown in FIG. 10a, the method for acquiring satellite coverage information may include a following step.

Step 1001a, second satellite coverage information is generated based on at least one of the first satellite coverage information, UE location information, or UE movement trajectory.

For more detailed description of step 1001a, reference may be made to the description of step 201 above.

Optionally, in embodiments or examples of the present disclosure, in the absence of contradiction, individual steps may be implemented independently, may be arbitrarily combined, or may be exchanged in order, and optional manners or optional examples may be arbitrarily combined and may be arbitrarily combined with other embodiments or examples.

To sum up, in the method for acquiring satellite coverage information according to embodiments of the present disclosure, after the network device acquires the first satellite coverage information, the network device may finally generate management information based on the acquired first satellite coverage information, and send the management information to the UE, thereby successfully realizing power saving management and/or mobility management on the UE, and reducing power consumption.

FIG. 10b is a schematic flow chart of a method for acquiring satellite coverage information according to an embodiment of the present disclosure, and the method is performed by a network device. As shown in FIG. 10b, the method for acquiring satellite coverage information may include a following step.

Step 1001b, management information is generated according to the second satellite coverage information and is sent to the UE.

For more detailed description of step 1001b, reference may be made to the description of step 201 above.

Optionally, in embodiments or examples of the present disclosure, in the absence of contradiction, individual steps may be implemented independently, may be arbitrarily combined, or may be exchanged in order, and optional manners or optional examples may be arbitrarily combined and may be arbitrarily combined with other embodiments or examples.

To sum up, in the method for acquiring satellite coverage information according to embodiments of the present disclosure, after the network device acquires the first satellite coverage information, the network device may finally generate the management information based on the acquired first satellite coverage information, and send the management information to the UE, thereby successfully realizing power saving management and/or mobility management on the UE, and reducing power consumption.

FIG. 10c is a schematic flow chart of a method for acquiring satellite coverage information according to an embodiment of the present disclosure, and the method is performed by a network device. As shown in FIG. 10c, the method for acquiring satellite coverage information may include following steps.

Step 1001c, in response to determining to acquire the first satellite coverage information, the first satellite coverage information sent by the third device is acquired.

Step 1001c, second satellite coverage information is generated according to at least one of the first satellite coverage information, UE location information, or UE movement trajectory;

Step 1002c, management information is generated according to the second satellite coverage information and is sent to the UE.

For more detailed description of steps 1001c - 1003c, reference may be made to the description of step 201 above.

Optionally, in embodiments or examples of the present disclosure, in the absence of contradiction, individual steps may be implemented independently, may be arbitrarily combined, or may be exchanged in order, and optional manners or optional examples may be arbitrarily combined and may be arbitrarily combined with other embodiments or examples.

To sum up, in the method for acquiring satellite coverage information according to embodiments of the present disclosure, after the network device acquires the first satellite coverage information, the network device may finally generate the management information based on the acquired first satellite coverage information, and send the management information to the UE, thereby successfully realizing power saving management and/or mobility management on the UE, and reducing power consumption.

FIG. 11 is a schematic flow chart of a method for acquiring satellite coverage information according to an embodiment of the present disclosure, and the method is performed by a network device. As shown in FIG. 11, the method for acquiring satellite coverage information may include a following step.

Step 1101, second indication information is sent to the UE, and the second indication information indicates that the network device supports acquisition of at least one of the first satellite coverage information or the second satellite coverage information.

Optionally, the second indication information may be used to indicate that the network device supports acquisition of at least one of the first satellite coverage information or the second satellite coverage information from a third device.

Optionally, in an embodiment of the present disclosure, the network device sends the second indication information to the UE to inform the UE of the capability of the network device, so that the UE may determine to acquire the first satellite coverage information or not to acquire the first satellite coverage information based on the second indication message and the capability of the UE itself, so as to subsequently perform a corresponding operation based on the determination result to finally obtain management information, thereby realizing mobility management and/or power saving management on the UE. Optionally, the capability of the UE may include: a capability of the UE to acquire the first satellite coverage information, for example, the UE supports acquisition of the first satellite coverage information from a third device.

For detailed introductions of the first satellite coverage information and the second satellite coverage information in step 1101, reference may be made to the description of the step 202 above.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the network device sends the second indication information to the UE, so that the UE may determine whether to acquire the first satellite coverage information based on the second indication information, and perform a corresponding operation based on the determination result to finally acquire management information, thereby successfully realizing power saving management and/or mobility management on the UE based on the management information, and reducing power consumption.

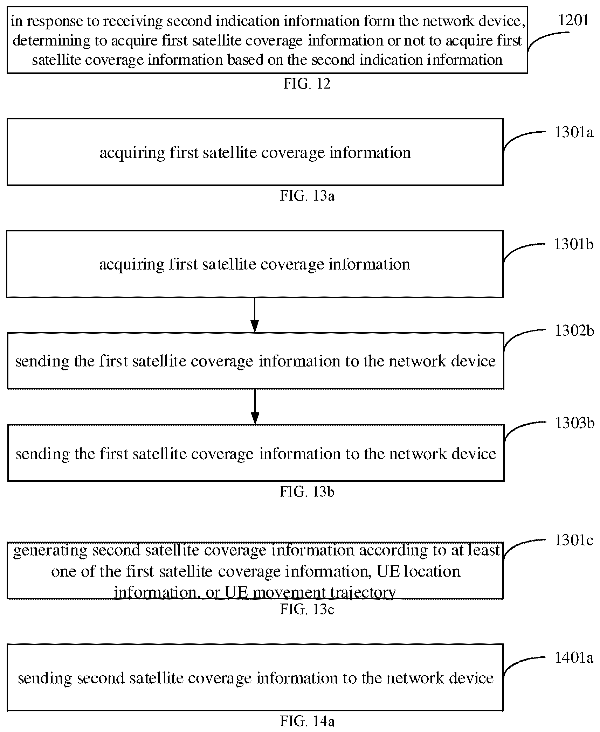

FIG. 12 is a schematic flow chart of a method for acquiring satellite coverage information according to an embodiment of the present disclosure, and the method is performed by a UE. As shown in FIG. 12, the method for acquiring satellite coverage information may include a following step.

Step 1201, in response to receiving second indication information from a network device, it is determined to acquire first satellite coverage information or not to acquire first satellite coverage information based on the first indication information.

For detailed introductions of the first satellite coverage information and the second satellite coverage information, reference may be made to the description of step 201 above.

Optionally, in an embodiment of the present disclosure, the second indication information may be used to indicate that the network device supports acquisition of at least one of the first satellite coverage information or the second satellite coverage information.

Optionally, in an embodiment of the present disclosure, the method for determining to acquire the first satellite coverage information or not to acquire the first satellite coverage information may include: determining to acquire the first satellite coverage information or not to acquire the first satellite coverage information based on the second indication information and a capability of the UE. Optionally, the capability of the UE may include: a capability of the UE to acquire the first satellite coverage information.

Optionally, the method of "determining to acquire the first satellite coverage information or not to acquire the first satellite coverage information based on the second indication information and the capability of the UE" may include at least one of:
in response to the UE supporting acquisition of the first satellite coverage information, and the network device supporting acquisition of at least one of the first satellite coverage information or the second satellite coverage information, the UE determines to acquire the first satellite coverage information or not to acquire the first satellite coverage information;
in response to the UE supporting acquisition of the first satellite coverage information, and the network device not supporting acquisition of the first satellite coverage information and the second satellite coverage information, the UE determines to acquire the first satellite coverage information;
in response to the UE not supporting acquisition of the first satellite coverage information, and the network device supporting acquisition of at least one of the first satellite coverage information or the second satellite coverage information, the UE determines to acquire the first satellite coverage information.

Optionally, in a case where the UE determines to acquire the first satellite coverage information, in an embodiment of the present disclosure, the UE may acquire the first satellite coverage information from a third device, and send the first satellite coverage information to the network device, so that the network device may finally generate management information based on the first satellite coverage information and send the management information to the UE. In another embodiment of the present disclosure, the UE may acquire the first satellite coverage information from a third device, determine the second satellite coverage information based on at least one of the first satellite coverage information, the UE location or the UE movement trajectory, and send the second satellite coverage information to the network device, so that the network device may finally generate management information based on the second satellite coverage information and send the management information to the UE. In another embodiment of the present disclosure, the UE may acquire the first satellite coverage information from a third device, determine the second satellite coverage information based on at least one of the first satellite coverage information, the UE location or the UE movement trajectory, generate management information based on the second satellite coverage information, and send the management information to the network device, so that the network device may authorize the management information and send the authorized management information to the UE.

Optionally, in an embodiment of the present disclosure, in a case where the UE determines not to acquire the first satellite coverage information, the UE may wait to receive the management information sent by the network device, or the UE may request to acquire the management information from the network device. For example, the UE may send a fifth request message to the network device, and the fifth request message may be used to request the management information. After the network device receives the fifth request message, the network device may acquire the first satellite coverage information from the third device, generate the second satellite coverage information based on at least one of the first satellite coverage information, the UE location or the UE movement trajectory, generate the management information based on the second satellite coverage information, and send the management information to the UE. Alternatively, after the network device receives the fifth request message, the network device may acquire the second satellite coverage information from the third device, generate the management information based on the second satellite coverage information, and send the management information to the UE.

Optionally, in an embodiment of the present disclosure, if the UE generates the management information, and the UE acquires the management information sent by the network device, a usage priority of the management information sent by the network device is higher than a usage priority of the management information generated by the UE.

In addition, for a detailed description of step 1201, reference may be made to the above content of step 202.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE will receive the second indication information sent by the network device, and the second indication information indicates that the network device supports acquisition of at least one of the first satellite coverage information or the second satellite coverage information. After that, the UE may determine to acquire the first satellite coverage information or not to acquire the first satellite coverage information based on the second indication information. It can be seen that in the method of the present disclosure, when the UE determines to acquire or not to acquire the first satellite coverage information, it is determined based on the capability of the network device to acquire at least one of the first satellite coverage information or the second satellite coverage information, which can ensure the accuracy of the determination result, that is, ensure the UE to accurately determines to acquire or not to acquire the first satellite coverage information, so that the management information may be acquired subsequently in a corresponding manner based on the determination result, so as to successfully perform power saving management and/or mobility management on the UE, thereby reducing power consumption.

FIG. 13a is a schematic flow chart of a method for acquiring satellite coverage information according to an embodiment of the present disclosure, and the method is performed by a UE. As shown in FIG. 13a, the method for acquiring satellite coverage information may include a following step.

Step 1301a, first satellite coverage information is acquired.

Optionally, in an embodiment of the present disclosure, the UE may acquire the first satellite coverage information from a third device. For example, the UE may send a sixth request message to the third device, the sixth request message is used to request the first satellite coverage information from the third device, and the third device may send the first satellite coverage information to the UE.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE may acquire the first satellite coverage information, so that the UE may subsequently acquire management information based on the first satellite coverage information, thereby successfully realizing mobility management and/or power saving management on the UE based on the management information, and reducing power consumption.

FIG. 13b is a schematic flow chart of a method for acquiring satellite coverage information according to an embodiment of the present disclosure, and the method is performed by a UE. As shown in FIG. 13b, the method for acquiring satellite coverage information may include following steps.

Step 1301b, first satellite coverage information is acquired.

Step 1302b: the first satellite coverage information is sent to a network device.

Step 1302b, management information sent by the network device is acquired.

For detailed introductions of steps 1301b-1301c, reference may be made to the above description of step 202.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE may acquire the first satellite coverage information, so that the UE may subsequently acquire management information based on the first satellite coverage information, thereby successfully realizing mobility management and/or power saving management on the UE based on the management information, and reducing power consumption.

FIG. 13c is a schematic flow chart of a method for acquiring satellite coverage information according to an embodiment of the present disclosure, and the method is performed by a UE. As shown in FIG. 13b, the method for acquiring satellite coverage information may include a following step.

Step 1301c, second satellite coverage information is generated based on at least one of the first satellite coverage information, UE location information, or UE movement trajectory.

For detailed introductions of step 1301c, reference may be made to the above description of step 202.

Optionally, in embodiments or examples of the present disclosure, in the absence of contradiction, individual steps may be implemented independently, may be arbitrarily combined, or may be exchanged in order, and optional manners or optional examples may be arbitrarily combined and may be arbitrarily combined with other embodiments or examples.

To sum up, in the method for acquiring satellite coverage information according to embodiments of the present disclosure, the UE may acquire the first satellite coverage information, so that the UE may subsequently acquire management information based on the first satellite coverage information, thereby successfully realizing mobility management and/or power saving management on the UE based on the management information, and reducing power consumption.

FIG. 14a is a schematic flow chart of a method for acquiring satellite coverage information according to an embodiment of the present disclosure, and the method is performed by a UE. As shown in FIG. 14a, the method for acquiring satellite coverage information may include a following step.

Step 1401a, the second satellite coverage information is sent to the network device.

For detailed introductions of step 1402a, reference may be made to the above descriptions of step 202 and step 1201.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE may send the second satellite coverage information to the network device, so that the network device may generate management information based on the second satellite coverage information and send the management information to the UE, thereby successfully realizing mobility management and/or power saving management on the UE based on the management information, and reducing power consumption.

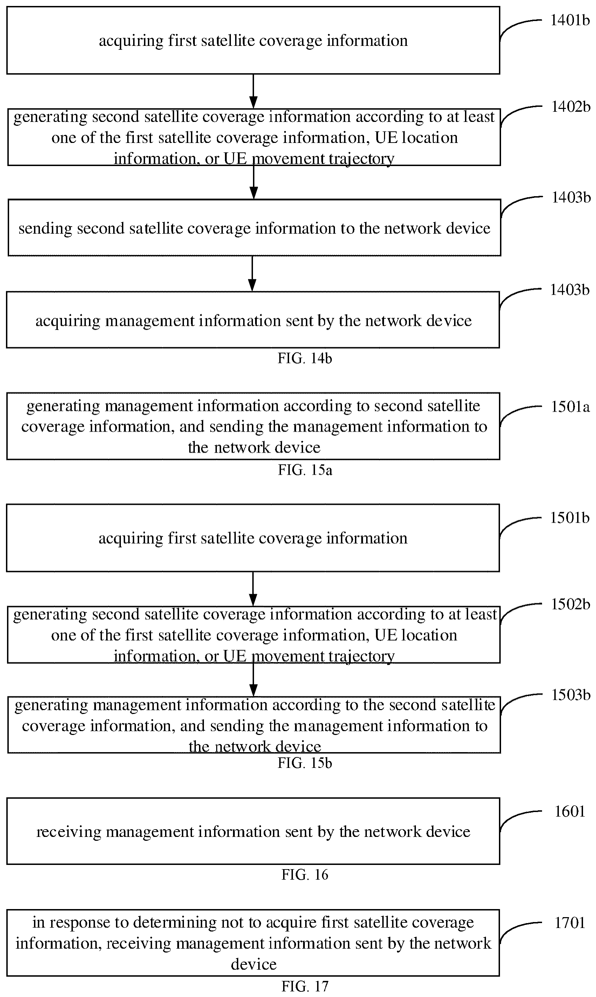

FIG. 14b is a schematic flow chart of a method for acquiring satellite coverage information according to an embodiment of the present disclosure, and the method is performed by a UE. As shown in FIG. 14b, the method for acquiring satellite coverage information may include the following steps.

Step 1401b, first satellite coverage information is acquired.

Step 1402b, second satellite coverage information is generated based on at least one of the first satellite coverage information, UE location information, or UE movement trajectory.

Step 1403b, the second satellite coverage information is sent to a network device.

Step 1404b, management information sent by the network device is acquired.

For detailed introductions of steps 1401b-1404b, reference may be made to the above descriptions of step 202 and step 1201.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE may send the second satellite coverage information to the network device, so that the network device may generate the management information based on the second satellite coverage information and send the management information to the UE, thereby successfully realizing mobility management and/or power saving management on the UE based on the management information, and reducing power consumption.

FIG. 15a is a schematic flow chart of a method for acquiring satellite coverage information according to an embodiment of the present disclosure, and the method is performed by a UE. As shown in FIG. 15a, the method for acquiring satellite coverage information may include a following step.

Step 1501a, management information is generated according to the second satellite coverage information, and is sent to a network device.

Optionally, in an embodiment of the present disclosure, the management information may be used to manage the UE to maintain a power saving state when there is no satellite signal coverage and to maintain a network connection state during the satellite signal coverage.

For detailed introductions of step 1501a, reference may be made to the above description of step 202 and step 1201.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE may send the second satellite coverage information to the network device, so that the network device may generate the management information based on the second satellite coverage information and send the management information to the UE, thereby successfully realizing mobility management and/or power saving management on the UE based on the management information, and reducing power consumption.

FIG. 15b is a schematic flow chart of a method for acquiring satellite coverage information according to an embodiment of the present disclosure, and the method is performed by a UE. As shown in FIG. 15b, the method for acquiring satellite coverage information may include following steps.

Step 1501b, first satellite coverage information is acquired.

Step 1502b, second satellite coverage information is generated based on at least one of the first satellite coverage information, UE location information, or UE movement trajectory.

Step 1503b, management information is generated according to the second satellite coverage information, and is sent to a network device.

For detailed introductions of steps 1501b-1503b, reference may be made to the above descriptions of step 202 and step 1201.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE may send the second satellite coverage information to the network device, so that the network device may generate the management information based on the second satellite coverage information and send the management information to the UE, thereby successfully realizing mobility management and/or power saving management on the UE based on the management information, thereby reducing power consumption.

FIG. 16 is a schematic flow chart of a method for acquiring satellite coverage information according to an embodiment of the present disclosure, and the method is performed by a UE. As shown in FIG. 16, the method for acquiring satellite coverage information may include a following step.

Step 1601, management information sent by the network device is received.

Optionally, in an embodiment of the present disclosure, the management information may be used to manage the UE to maintain a power saving state when there is no satellite signal coverage, and to maintain a network connection state during the satellite signal coverage.

For detailed introduction of step 1601, reference may be made to the above descriptions of step 202 and step 1201.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE may receive the management information sent by the network device, thereby successfully realizing mobility management and/or power saving management on the UE based on the management information, and reducing power consumption.

FIG. 17 is a schematic flow chart of a method for acquiring satellite coverage information according to an embodiment of the present disclosure, and the method is performed by a UE. As shown in FIG. 17, the method for acquiring satellite coverage information may include a following step.

Step 1701, in response to determining not to acquire first satellite coverage information, management information sent by a network device is received.

Optionally, in an embodiment of the present disclosure, the management information may be used to manage the UE to maintain a power saving state when there is no satellite signal coverage, and to maintain a network connection state during the satellite signal coverage.

For detailed introductions of step 1702, reference may be made to the above descriptions of step 202 and step 1201.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE may receive the management information sent by the network device, thereby successfully realizing mobility management and/or power saving management on the UE based on the management information, and reducing power consumption.

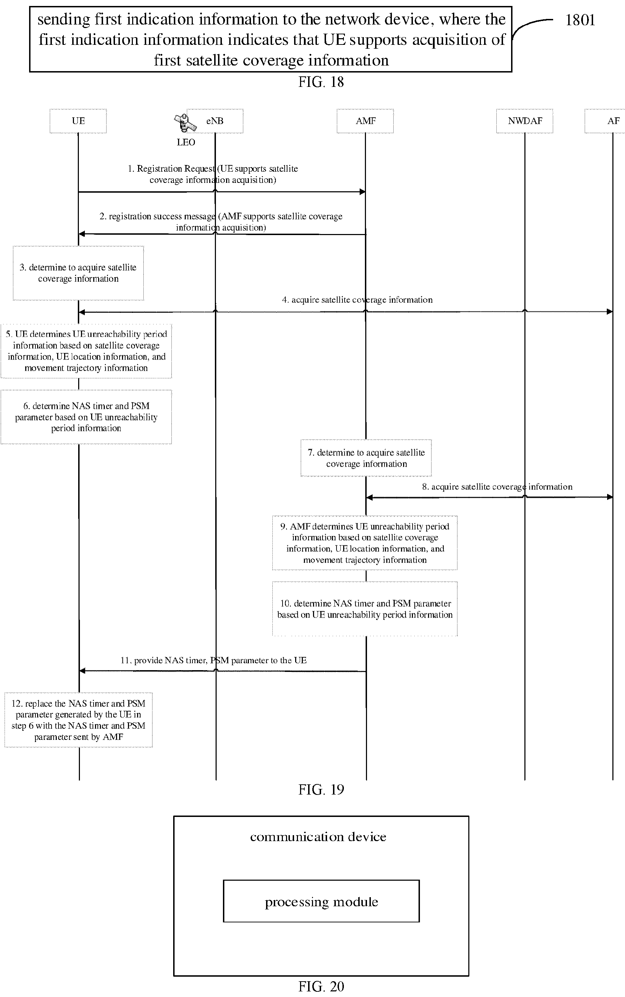

FIG. 18 is a schematic flow chart of a method for acquiring satellite coverage information according to an embodiment of the present disclosure, and the method is performed by a UE. As shown in FIG. 18, the method for acquiring satellite coverage information may include a following step.

Step 1801, first indication information is sent to a network device, and the first indication information indicates that the UE supports acquisition of first satellite coverage information.

For detailed introductions of the first indication information, reference may be made to the above description of step 202.

Optionally, the UE sends the first indication message to the network device to inform the network device of the capability of the UE, so that the network device may determine to acquire the first satellite coverage information or not to acquire the first satellite coverage information based on the first indication message and the network device's own capability, so as to subsequently perform a corresponding operation based on the determination result to finally acquire management information, and send the management information to the UE, thereby realizing mobility management and/or power saving management on the UE. Optionally, the capability of the network device itself may include: a capability of the UE to acquire at least one of the first satellite coverage information or the second satellite coverage information. For example, the UE supports acquisition of at least one of the first satellite coverage information or the second satellite coverage information from a third device.

For detailed introductions of the first satellite coverage information and the second satellite coverage information in step 1801, reference may be made to the above description of step 202.

Optionally, optional examples in embodiments of the present disclosure may be combined arbitrarily, and any embodiment of the present disclosure may be combined with the steps of other embodiments or the optional examples in other embodiments without contradiction.

To sum up, in the method for acquiring satellite coverage information according to embodiments of the present disclosure, the UE will send the first indication information to the network device, so that the network device may determine whether to acquire the first satellite coverage information based on the first indication information, perform a corresponding operation based on the determination result to finally acquire management information, and provide the management information to the UE, thereby successfully realizing mobility management and/or power saving management on the UE based on the management information, and reducing power consumption.

Embodiments of the present disclosure further provide a method for acquiring satellite coverage information, which is performed by a first device, and the steps performed by the first device may include at least one of the followings:

Optionally, in response to acquiring first indication information from a second device, it is determined to acquire first satellite coverage information or not to acquire first satellite coverage information based on the first indication information; and the first indication information indicates that the second device supports acquisition of the first satellite coverage information.

Optionally, the first indication information indicates that the second device supports acquisition of at least one of the first satellite coverage information or second satellite coverage information.

The first satellite coverage information indicates at least one of: a satellite signal coverage condition of a satellite network currently accessed by a UE or a satellite signal coverage condition of at least one available satellite network.

The second satellite coverage information indicates: a satellite signal coverage condition of the UE.

Optionally, determining to acquire the first satellite coverage information or not to acquire the first satellite coverage information based on the first indication information includes:
determining to acquire the first satellite coverage information or not to acquire the first satellite coverage information based on the first indication information and a capability of the first device; where the capability of the first device includes: a capability of the first device to acquire at least one of the first satellite coverage information or second satellite coverage information.

Optionally, the method further includes:
sending second indication information to the second device, where the second indication information indicates that the first device supports acquisition of at least one of the first satellite coverage information or second satellite coverage information, and the second indication information is configured for the second device to determine to acquire the first satellite coverage information or not to acquire the first satellite coverage information.

Optionally, the second satellite coverage information indicates a satellite coverage condition of the UE at a specified location.

Optionally, the second satellite coverage information includes at least one of:
a time of satellite signal coverage to the UE;
a duration of satellite signal coverage to the UE;
a time of no satellite signal coverage to the UE; or
a duration of no satellite signal coverage to the UE.

Optionally, in response to determining to acquire the first satellite coverage information, the method further includes:
acquiring the first satellite coverage information sent by the second device or a third device.

Optionally, the method further includes:
generating second satellite coverage information according to at least one of the first satellite coverage information, UE location information, or UE movement trajectory.

Optionally, the method further includes:
generating management information according to the second satellite coverage information, where the management information is configured to manage the UE to maintain a power saving state when there is no satellite signal coverage and to maintain a network connection state during the satellite signal coverage.

Optionally, the method further includes:
sending the management information to the second device.

Optionally, in response to determining not to acquire the first satellite coverage information, the method further includes:
acquiring management information sent by the second device.

Optionally, the first device is a network device, and the second device is a UE; or the first device is a UE, and the second device is a network device.

Optionally, in response to the first device being a network device and the second device being a UE, after acquiring the management information sent by the second device, the method further includes:
authorizing the management information;
in response to approval of authorization, returning authorized management information to the second device.

Optionally, in response to the first device being a network device and the second device being a UE, and in response to determining not to acquire the first satellite coverage information, the method further includes:
acquiring second satellite coverage information sent by the second device or a third device.

Optionally, in response to the first device being a UE and the second device being a network device, and in response to determining to acquire the first satellite coverage information, the method further includes at least one of:
sending the first satellite coverage information to the second device; or
sending the second satellite coverage information to the second device.

Optionally, in response to the first device being a network device and the second device being a UE, and in response to the first device generating management information and the first device acquiring management information sent by the second device, a usage priority of the management information generated by the first device is higher than a usage priority of the management information sent by the second device; or
in response to the first device being a UE and the second device being a network device, and in response to the first device generating management information and the first device acquiring management information sent by the second device, a usage priority of the management information sent by the second device is higher than a usage priority of the management information generated by the first device.

Optionally, the management information includes at least one of:
an extended discontinuous reception (eDRX) parameter in a connection management idle state (CM-IDLE);
a parameter for configuring a mobile initiated connection only (MICO) mode;
a parameter for configuring a power saving PSM state; or
a duration of a periodic registration timer.

Embodiments of the present disclosure further provide a method for acquiring satellite coverage information, which is performed by a second device, and the steps performed by the second device may include at least one of the followings:

Optionally, first indication information is sent to a first device, the first indication information indicates that the second device supports acquisition of first satellite coverage information, and the first indication information is configured for the first device to determine to acquire the first satellite coverage information or not acquire the first satellite coverage information.

Optionally, the first indication information indicates that the second device supports acquisition of at least one of the first satellite coverage information or second satellite coverage information;
the first satellite coverage information indicates at least one of: a satellite signal coverage condition of a satellite network currently accessed by a user equipment (UE) or a satellite signal coverage condition of at least one available satellite network;
the second satellite coverage information indicates: a satellite signal coverage condition of the UE.

Optionally, the method further includes:
acquiring second indication information sent by the first device, where the second indication information indicates that the first device supports acquisition of at least one of the first satellite coverage information or second satellite coverage information, and the second indication information is configured for the second device to determine to acquire the first satellite coverage information or not to acquire the first satellite coverage information.

Optionally, the second satellite coverage information indicates a satellite coverage condition of the UE at a specified location.

Optionally, the second satellite coverage information includes at least one of:
a time of satellite signal coverage to the UE;
a duration of satellite signal coverage to the UE;
a time of no satellite signal coverage to the UE; or
a duration of no satellite signal coverage to the UE.

Optionally, the method further includes:
acquiring the first satellite coverage information sent by a third device.

Optionally, the method further includes:
sending the first satellite coverage information to the first device.

Optionally, the method further includes at least one of:
generating second satellite coverage information according to at least one of the first satellite coverage information, UE location information, or UE movement trajectory; or
acquiring second satellite coverage information sent by a third device.

Optionally, the method further includes:
generating management information according to the second satellite coverage information, where the management information is configured to manage the UE to maintain a power saving state when there is no satellite signal coverage and to maintain a network connection state during the satellite signal coverage.

Optionally, the method further includes:
sending the management information to the first device.

Optionally, the first device is a network device, and the second device is a UE; or the first device is a UE, and the second device is a network device.

Optionally, in response to the first device being a network device and the second device being a UE, after sending the management information to the first device, the method further includes:
acquiring authorized management information sent by the first device.

Optionally, in response to the first device being a network device and the second device being a UE, the method further includes:
sending the second satellite coverage information to the first device.

Optionally, the method further includes:
acquiring management information sent by the first device.

Optionally, in response to the first device being a network device and the second device being a UE, the method further includes at least one of:
acquiring the first satellite coverage information sent by the first device; or
acquiring the second satellite coverage information sent by the first device.

Optionally, the method further includes:
determining to acquire the first satellite coverage information or not to acquire the first satellite coverage information based on the second indication information.

Optionally, determining to acquire the first satellite coverage information or not to acquire the first satellite coverage information based on the second indication information includes:
determining to acquire the first satellite coverage information or not to acquire the first satellite coverage information based on the second indication information and a capability of the second device; the capability of the second device includes: a capability of the second device to acquire at least one of the first satellite coverage information or the second satellite coverage information.

Optionally, in response to the first device being a network device and the second device being a UE, and in response to the second device generating management information and the second device acquiring management information sent by the first device, a usage priority of the management information sent by the first device is higher than a usage priority of the management information generated by the second device; or
in response to the first device being a UE and the second device being a network device, and in response to the second device generating management information and the second device acquiring management information sent by the first device, a usage priority of the management information generated by the second device is higher than a usage priority of the management information sent by the first device.

Optionally, the management information includes at least one of:
an extended discontinuous reception (eDRX) parameter in a connection management idle state (CM-IDLE);
a parameter for configuring a mobile initiated connection only (MICO) mode;
a parameter for configuring a power saving PSM state; or
a duration of a periodic registration timer.

Embodiments of the present disclosure also provide an interacting method between the first device and the second device. The method may include at least one of the followings.

Optionally, the first device acquires the first satellite coverage information, determines the second satellite coverage information based on at least one of the first satellite coverage information, the UE location or the UE movement trajectory, and generates the management information based on the second satellite coverage information. Optionally, in some embodiments, after generating the management information, the first device may send the management information to the second device. In some other embodiments, after generating the management information, the first device may not send the management information to the second device.

Optionally, the first device acquires the first satellite coverage information and sends the first satellite coverage information to the second device; and the second device determines the second satellite coverage information based on at least one of the first satellite coverage information, the UE location or the UE movement trajectory, and generates the management information based on the second satellite coverage information. Optionally, in some embodiments, after generating the management information, the second device may send the management information to the first device. In some other embodiments, after generating the management information, the second device may not send the management information to the first device.

Optionally, the first device acquires the first satellite coverage information, determines the second satellite coverage information based on at least one of the first satellite coverage information, the UE location or the UE movement trajectory, and sends the second satellite coverage information to the second device; and the second device generates the management information based on the second satellite coverage information. Optionally, in some embodiments, after generating the management information, the second device may send the management information to the first device. In some other embodiments, after generating the management information, the second device may not send the management information to the first device.

Optionally, the second device acquires the first satellite coverage information, determines the second satellite coverage information based on at least one of the first satellite coverage information, the UE location or the UE movement trajectory, and generates the management information based on the second satellite coverage information. Optionally, in some embodiments, after generating the management information, the second device may send the management information to the first device. In some other embodiments, after generating the management information, the second device may not send the management information to the first device.

Optionally, the second device acquires the first satellite coverage information and sends the first satellite coverage information to the first device; and the first device determines the second satellite coverage information based on at least one of the first satellite coverage information, the UE location or the UE movement trajectory, and generates the management information based on the second satellite coverage information. Optionally, in some embodiments, after generating the management information, the first device may send the management information to the second device. In some other embodiments, after generating the management information, the first device may not send the management information to the second device.

Optionally, the second device acquires the first satellite coverage information, determines the second satellite coverage information based on at least one of the first satellite coverage information, the UE location or the UE movement trajectory, and sends the second satellite coverage information to the first device; and the first device generates the management information based on the second satellite coverage information. Optionally, in some embodiments, after generating the management information, the first device may send the management information to the second device. In some other embodiments, after generating the management information, the first device may not send the management information to the second device.

Examples of embodiments of the present disclosure will be described below:
Step 1, in response to the UE supporting a capability of satellite coverage acquisition (i.e., the aforementioned first satellite coverage information), an indication (i.e., the aforementioned first indication information) that the UE supports the capability of satellite coverage information acquisition is sent to the network.

In response to the network supporting a capability of satellite coverage information acquisition, an indication (i.e., the aforementioned second indication information) that the network supports the capability of satellite coverage information acquisition is sent to the UE.

Step 2, based on step 1, in response to the UE receiving the indication that the network supports the capability of satellite coverage information acquisition, the UE determines whether to acquire satellite coverage information, including that the UE determines to acquire the satellite coverage information, or the UE determines not to acquire the satellite coverage information.

Step 3, based on step 2, in response to the UE acquiring the satellite coverage information, the UE further generates UE-related satellite coverage information (i.e., the aforementioned second satellite coverage information) based on the satellite coverage information, the UE location and/or the UE movement trajectory.

Step 4, based on step 3, the method further includes that the UE generates a power saving parameter and an NAS timer (i.e., the aforementioned management information) according to the UE-related satellite coverage information.

Step 5, the method according to step 3 or 4 further includes, in response to receiving at least one of the following information from the network:
the satellite coverage information;
the UE-related satellite coverage information; or
the power saving parameter and the NAS timer,
the information received from the network has a higher usage priority than that of the information generated by the UE itself.

Step 6, based on step 2, in response to the UE not acquiring the satellite coverage information, the UE waits to receive the power saving parameter and the NAS timer from the network.

Step 7, based on step 1, in response to the network receiving the indication that the UE supports the capability of satellite coverage information acquisition, the network determines whether to acquire the satellite coverage information, including that the network determines to acquire the satellite coverage information, or the network determines not to acquire the satellite coverage information.

Step 8, based on step 7, in response to the network determining to acquire the satellite coverage information, the network acquires the satellite coverage information and generates UE-related satellite coverage information according to the UE location and/or UE movement trajectory, or acquires the UE-related satellite coverage information.

Step 9, based on step 8, the network generates the power saving parameter and NAS timer according to the UE-related satellite coverage information, and provides them to the UE.

Step 10, based on step 9, the method further includes that: if the network receives the power saving parameter and NAS timer from the UE, the network still uses the power saving parameter and NAS timer generated by the network and provided them to the UE.

Step 11, based on step 7, in response to the network not acquiring the satellite coverage information, the network waits to receive the power saving parameter and NAS timer from the UE.

Step 12, based on steps 1-11, the UE-related satellite coverage information includes at least one of:
a time of satellite signal coverage to the UE;
a duration of satellite signal coverage to the UE;
a time of no satellite signal coverage to the UE; or
a UE unreachability duration (a duration of no satellite signal coverage to the UE)

Step 13, based on steps 1-11, the power saving parameter and NAS timer are used to ensure that the UE remains in a power saving state when there is no satellite signal coverage, and initiates interaction with the network when satellite signal coverage is restored. The NAS timer includes a periodic registration update timer, and the power saving parameter includes an eDRX parameter, a PSM parameter, etc.

Optionally, in some embodiments, the above steps 3, 8 and 9 may be combined.

Optionally, in this embodiment or example, in the absence of contradiction, the steps in FIG. 18 may be implemented independently, may be arbitrarily combined or may be exchanged in order, and optional manners or optional examples may be arbitrarily combined, and may be arbitrarily combined with other embodiments or examples.

FIG. 19 is a schematic interactive diagram of a method for acquiring satellite coverage information according to embodiments of the present disclosure. As shown in FIG. 19, the network device is an AMF, and the method for acquiring satellite coverage information may include following steps.
1. The UE accesses a 5GC network via a satellite and initiates an access registration process. If the UE supports acquisition of satellite coverage information, a registration request message sent by the UE to the AMF includes an indication that the UE supports the capability of satellite coverage information acquisition.
2. AMF receives the registration request from the UE. If the AMF supports satellite coverage information acquisition, a registration success message sent by the AMF includes an indication that the AMF supports the capability of satellite coverage information acquisition.
3. Although the AMF supports the capability of satellite coverage information acquisition, the UE determines to acquire the satellite coverage information.
4. The UE acquires the satellite coverage information from an AF or a management server responsible for satellite operation information.
5. The UE calculates and generates UE unreachability period information according to the satellite coverage information, the UE location information and the UE movement trajectory information. The UE unreachability period information includes a period when the satellite has no signal coverage to a specific location of the UE.
6. The UE further sets an NAS timer (e.g., periodic registration update timer) and a PSM parameter (e.g., eDRX parameter, etc.) according to the UE unreachability period information.
7. Although the UE supports the capability of satellite coverage information acquisition, the AMF determines to acquire the satellite coverage information.
8. AMF acquires the satellite coverage information from the AF or the management server responsible for satellite operation information.
9. The AMF calculates and generates UE unreachability period information according to the satellite coverage information, the UE location information and the UE movement trajectory information. The UE unreachability period information includes a period when the satellite has no signal coverage to a specific location of the UE.
10. AMF further sets an NAS timer (e.g., periodic registration update timer) and a PSM parameter (e.g., eDRX parameter, etc.) according to the UE unreachability period information.
11. AMF provides the NAS timer and PSM parameter to the UE.
12. After receiving the NAS timer and PSM parameter sent by AMF, the UE replaces the NAS timer and PSM parameter generated by the UE in step 6 with the NAS timer and PSM parameter sent by AMF.

Optionally, in some embodiments, the above steps 4, 9, 10 and 11 may be combined. In some embodiments, the above steps 4, 5 and 10 may be combined. In some embodiments, the above steps 4, 5 and 10 may be combined

Optionally, in this embodiment or example, in the absence of contradiction, the steps in FIG. 18 may be implemented independently, may be arbitrarily combined or may be exchanged in order, and optional manners or optional examples may be arbitrarily combined, and may be arbitrarily combined with other embodiments or examples.

FIG. 20 is a schematic block diagram of a communication device according to an embodiment of the present disclosure, as shown in FIG. 20, the communication device may include:
a processing module, configured to: in response to receiving first indication information from a UE, determine to acquire first satellite coverage information or not to acquire first satellite coverage information based on the first indication information;
the first indication information indicates that the UE supports acquisition of the first satellite coverage information;
the first satellite coverage information indicates at least one of:
a satellite coverage condition of a satellite network currently accessed by the UE; or
a satellite coverage condition of at least one available satellite network.

To sum up, in the communication device according to embodiments of the present disclosure, the network device receives the first indication information sent by the UE, and the first indication information indicates that the UE supports the acquisition of the first satellite coverage information. After that, the network device may determine to acquire the first satellite coverage information or not to acquire the first satellite coverage information based on the first indication information. It can be seen that in the method of the present disclosure, when the network device determines to acquire or not to acquire the first satellite coverage information, it is determined based on the capability of the UE to acquire the first satellite coverage information, which can ensure the accuracy of the determination result, that is, ensure the network device to accurately determine to acquire or not to acquire the first satellite coverage information, so that the management information may be acquired subsequently in a corresponding manner based on the determination result, so as to successfully perform power saving management and/or mobility management on the UE, thereby reducing power consumption.

Optionally, in an embodiment of the present disclosure, in response to determining not to acquire the first satellite coverage information, the communication device is further configured to:
acquire second satellite coverage information or management information; where the management information is used to manage the UE to maintain a power saving state when there is no satellite signal coverage and to maintain a network connection state during satellite signal coverage.

Optionally, in an embodiment of the present disclosure, the communication device is further configured to:
acquire the second satellite coverage information sent by the UE or a first device.

Optionally, in an embodiment of the present disclosure, the communication device is further configured to:
generate management information according to the second satellite coverage information, and provide the management information to the UE.

Optionally, in an embodiment of the present disclosure, the communication device is further configured to:
acquire the management information sent by the UE.

Optionally, in an embodiment of the present disclosure, the communication device is further configured to:
authorize the management information;
in response to approval of authorization, return the management information to the UE.

Optionally, in an embodiment of the present disclosure, the communication device is further configured to:
acquire the first satellite coverage information sent by the first device.

Optionally, in an embodiment of the present disclosure, the communication device is further configured to:
generate second satellite coverage information according to at least one of the first satellite coverage information, UE location information, or UE movement trajectory;
generate management information according to the second satellite coverage information, and send the management information to the UE.

Optionally, in an embodiment of the present disclosure, if the network device generates the management information, and the network device acquires the management information sent by the UE, a usage priority of the management information generated by the network device is higher than a usage priority of the management information sent by the UE.

Optionally, in an embodiment of the present disclosure, the second satellite coverage information indicates a satellite coverage condition of the UE at a specified location;
the second satellite coverage information includes at least one of:
a time of satellite signal coverage to the UE;
a duration of satellite signal coverage to the UE;
a time of no satellite signal coverage to the UE; or
a duration of no satellite signal coverage to the UE.

Optionally, in an embodiment of the present disclosure, the processing module is further configured to:
determine to acquire the first satellite coverage information or not to acquire the first satellite coverage information based on the first indication information and a capability of the network device; where the capability of the network device includes: a capability of the network device to acquire at least one of the first satellite coverage information or the second satellite coverage information;
the second satellite coverage information indicates the satellite signal coverage condition.

Optionally, in an embodiment of the present disclosure, the communication device is further configured to:
send second indication information to the UE, where the second indication information indicates that the network device supports acquisition of at least one of the first satellite coverage information or the second satellite coverage information.

Optionally, in an embodiment of the present disclosure, the management information includes at least one of:
an extended discontinuous reception (eDRX) parameter in a connection management idle state (CM-IDLE);
a parameter for configuring a mobile initiated connection only (MICO) mode;
a parameter for configuring a power saving mode (PSM); or
a duration of a periodic registration timer.

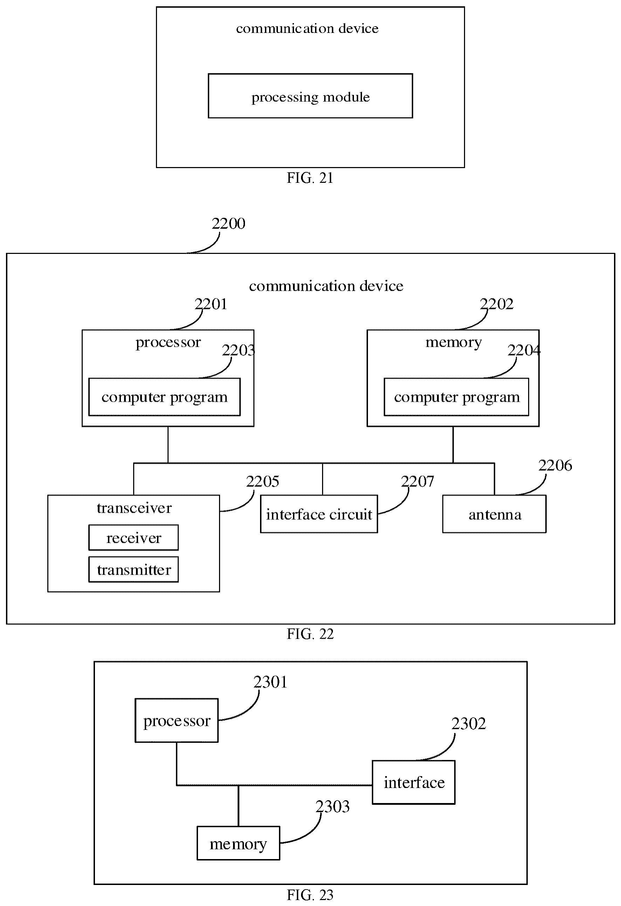

FIG. 21 is a schematic block diagram of a communication device according to an embodiment of the present disclosure. As shown in FIG. 21, the communication device may include:
a processing module, configured to: in response to receiving second indication information from a network device, determine to acquire first satellite coverage information or not to acquire first satellite coverage information based on the second indication information.

The second indication information indicates that the network device supports acquisition of at least one of the first satellite coverage information or second satellite coverage information.

The first satellite coverage information indicates at least one of: a satellite coverage condition of a satellite network currently accessed by a UE, or a satellite coverage condition of at least one available satellite network.

The second satellite coverage information indicates a satellite signal coverage condition of the UE.

To sum up, in the communication device according to embodiments of the present disclosure, the UE will receive the second indication information sent by the network device, and the second indication information indicates that the network device supports acquisition of at least one of the first satellite coverage information or the second satellite coverage information. After that, the UE may determine to acquire the first satellite coverage information or not to acquire the first satellite coverage information based on the second indication information. It can be seen that in the method of the present disclosure, when the UE determines to acquire or not to acquire the first satellite coverage information, it is determined based on the capability of the network device to acquire at least one of the first satellite coverage information or the second satellite coverage information, which can ensure the accuracy of the determination result, that is, ensure the UE to accurately determines to acquire or not to acquire the first satellite coverage information, so that the management information may be acquired subsequently in a corresponding manner based on the determination result, so as to successfully perform power saving management and/or mobility management on the UE, thereby reducing power consumption.

Optionally, in an embodiment of the present disclosure, the communication device is further configured to:
acquire first satellite coverage information;
generate second satellite coverage information according to at least one of the first satellite coverage information, UE location information, or UE movement trajectory.

Optionally, in an embodiment of the present disclosure, the communication device is further configured to:
send the second satellite coverage information to a network device; or
generate management information based on the second satellite coverage information, and send the management information to the network device; where the management information is used to manage the UE to maintain a power saving state when there is no satellite signal coverage and to maintain a network connection state during satellite signal coverage.

Optionally, in an embodiment of the present disclosure, the communication device is further configured to:
receive management information sent by the network device.

Optionally, in an embodiment of the present disclosure, the communication device is further configured to:
acquire management information sent by network device.

Optionally, in an embodiment of the present disclosure, if the UE generates the management information, and the UE acquires the management information sent by the network device, a usage priority of the management information sent by the network device is higher than a usage priority of the management information generated by the UE.

Optionally, in an embodiment of the present disclosure, the second satellite coverage information indicates a satellite coverage condition of the UE at a specified location; and the second satellite coverage information includes at least one of:
a time of satellite signal coverage to the UE;
a duration of satellite signal coverage to the UE;
a time of no satellite signal coverage to the UE; or
a duration of no satellite signal coverage to the UE.

Optionally, in an embodiment of the present disclosure, the processing module is further configured to:
determine to acquire the first satellite coverage information or not to acquire the first satellite coverage information based on the second indication information and a capability of the UE, where the capability of the UE includes: a capability of the UE to acquire the first satellite coverage information.

Optionally, in an embodiment of the present disclosure, the communication device is further configured to:
send first indication information to the network device, where the first indication information indicates that the UE supports acquisition of first satellite coverage information.

Optionally, in an embodiment of the present disclosure, the management information includes at least one of:
an extended discontinuous reception (eDRX) parameter in a connection management idle state (CM-IDLE);
a parameter for configuring a mobile initiated connection only (MICO) mode;
a parameter for configuring a power saving mode (PSM); or
a duration of a periodic registration timer.

Referring to FIG. 22, FIG. 22 is a schematic block diagram of a communication device 2200 according to embodiments of the present disclosure. The communication device 2200 may be a network device, may also be a terminal, may also be a chip, a chip system, or a processor that supports the network device to implement the above method, or may also be a chip, a chip system, or a processor that supports the terminal to implement the above method. The communication device may be used to implement the methods as described in the above method embodiments, and for details, reference may be made to the descriptions on the above method embodiments.

The communication device 2200 may include one or more processors 2201. The processor 2201 may be a general-purpose processor or a special-purpose processor. For example, it may be a baseband processor or a central processing unit. The baseband processor may be used to process a communication protocol and communication data, and the central processing unit may be used to control the communication device (such as a base station, a baseband chip, a terminal, a terminal chip, a DU or a CU, etc.), execute computer programs, and process data of computer programs.

Optionally, the communication device 2200 may further include one or more memories 2202 that may have stored therein a computer program 2204. The processor 2201 executes the computer program 2204 to cause the communication device 2200 to implement the methods as described in the above method embodiments. Optionally, the memory 2202 may have stored therein data. The communication device 2200 and the memory 2202 may be set separately or integrated together.

Optionally, the communication device 2200 may further include a transceiver 2205 and an antenna 2206. The transceiver 2205 may be called a transceiving element, a transceiving machine, a transceiving circuit or the like, for implementing a transceiving function. The transceiver 2205 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 2200 may further include one or more interface circuits 2206. The interface circuit 2206 is configured to receive a code instruction and transmit the code instruction to the processor 2201. The processor 2201 runs the code instruction to cause the communication device 2200 to execute the methods as described in the foregoing method embodiments.

In an implementation manner, the processor 2201 may include a transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation manner, the processor 2201 may have stored therein a computer program 2203 that, when run on the processor 2201, causes the communication device 2200 to implement the method as described in the foregoing method embodiments. The computer program 2203 may be solidified in the processor 2201, and in this case, the processor 2201 may be implemented by hardware.

In an implementation manner, the communication device 2200 may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS, also called positive channel metal oxide semiconductor), a bipolar junction transistor (BJT), a bipolar CMOS (BiCMOS), silicon germanium (SiGe), gallium arsenide (GaAs), etc.

The communication device described in the above embodiments may be the network device or the terminal, but the scope of the communication device described in the present disclosure is not limited thereto, and a structure of the communication device is not limited to FIG. 22. The communication device may be a stand-alone device or may be a part of a large device. For example, the communication device may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

For the case where the communication device may be a chip or a chip system, reference may be made to a schematic structural diagram of the chip shown in FIG. 23. The chip shown in FIG. 23 includes a processor 2301 and an interface 2302. Optionally, one or more processors 2301 may be provided, and a plurality of interfaces 2302 may be provided.

Optionally, the chip further includes a memory 2303 for storing necessary computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present disclosure.

The present disclosure also provides a readable storage medium having stored therein instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, for the specific working process of the above-described system, device and unit reference may be made to the corresponding process in the foregoing method embodiments, which will not be repeated here.

The above describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A method for acquiring satellite coverage information, performed by a first device, comprising:
in response to acquiring first indication information from a second device, determining to acquire first satellite coverage information or not to acquire first satellite coverage information based on the first indication information; wherein the first indication information indicates that the second device supports acquisition of the first satellite coverage information.

2. The method according to claim 1, wherein the first indication information indicates that the second device supports acquisition of at least one of the first satellite coverage information or second satellite coverage information;
wherein the first satellite coverage information indicates at least one of: a satellite signal coverage condition of a satellite network currently accessed by a user equipment (UE) or a satellite signal coverage condition of at least one available satellite network;
the second satellite coverage information indicates: a satellite signal coverage condition of the UE.

3. The method according to claim 1 or 2, wherein determining to acquire the first satellite coverage information or not to acquire the first satellite coverage information based on the first indication information comprises:
determining to acquire the first satellite coverage information or not to acquire the first satellite coverage information based on the first indication information and a capability of the first device; wherein the capability of the first device comprises: a capability of the first device to acquire at least one of the first satellite coverage information or second satellite coverage information.

4. The method according to any one of claims 1 to 3, further comprising:
sending second indication information to the second device, wherein the second indication information indicates that the first device supports acquisition of at least one of the first satellite coverage information or second satellite coverage information, and the second indication information is configured for the second device to determine to acquire the first satellite coverage information or not to acquire the first satellite coverage information.

5. The method according to any one of claims 2 to 4, wherein the second satellite coverage information indicates a satellite coverage condition of the UE at a specified location.

6. The method according to any one of claims 2 to 5, wherein the second satellite coverage information comprises at least one of:
a time of satellite signal coverage to the UE;
a duration of satellite signal coverage to the UE;
a time of no satellite signal coverage to the UE; or
a duration of no satellite signal coverage to the UE.

7. The method according to any one of claims 1 to 6, wherein in response to determining to acquire the first satellite coverage information, the method further comprises:
acquiring the first satellite coverage information sent by the second device or a third device.

8. The method according to claim 2 or 7, further comprising:
generating second satellite coverage information according to at least one of the first satellite coverage information, UE location information, or UE movement trajectory.

9. The method according to claim 2 or 8, further comprising:
generating management information according to the second satellite coverage information, wherein the management information is configured to manage the UE to maintain a power saving state when there is no satellite signal coverage and to maintain a network connection state during the satellite signal coverage.

10. The method according to claim 9, further comprising:
sending the management information to the second device.

11. The method according to any one of claims 1 to 6, wherein in response to determining not to acquire the first satellite coverage information, the method further comprises:
acquiring management information sent by the second device.

12. The method according to any one of claims 1 to 11, wherein the first device is a network device, and the second device is a UE; or the first device is a UE, and the second device is a network device.

13. The method according to claim 11 or 12, wherein in response to the first device being a network device and the second device being a UE, after acquiring the management information sent by the second device, the method further comprises:
authorizing the management information;
in response to approval of authorization, returning authorized management information to the second device.

14. The method according to any one of claims 1 to 6, 9, and 10, wherein in response to the first device being a network device and the second device being a UE, and in response to determining not to acquire the first satellite coverage information, the method further comprises:
acquiring second satellite coverage information sent by the second device or a third device.

15. The method according to claim 7, 8 or 14, wherein in response to the first device being a UE and the second device being a network device, and in response to determining to acquire the first satellite coverage information, the method further comprises at least one of:
sending the first satellite coverage information to the second device; or
sending the second satellite coverage information to the second device.

16. The method according to any one of claims 1 to 6, wherein in response to the first device being a network device and the second device being a UE, and in response to the first device generating management information and the first device acquiring management information sent by the second device, a usage priority of the management information generated by the first device is higher than a usage priority of the management information sent by the second device; or
in response to the first device being a UE and the second device being a network device, and in response to the first device generating management information and the first device acquiring management information sent by the second device, a usage priority of the management information sent by the second device is higher than a usage priority of the management information generated by the first device.

17. The method according to any one of claims 4 to 7, 10 or 14, wherein the management information comprises at least one of:
an extended discontinuous reception (eDRX) parameter in a connection management idle state (CM-IDLE);
a parameter for configuring a mobile initiated connection only (MICO) mode;
a parameter for configuring a power saving mode (PSM); or
a duration of a periodic registration timer.

18. A method for acquiring satellite coverage information, performed by a second device, comprising:
sending first indication information to a first device, wherein the first indication information indicates that the second device supports acquisition of first satellite coverage information, and the first indication information is configured for the first device to determine to acquire the first satellite coverage information or not acquire the first satellite coverage information.

19. The method according to claim 18, wherein the first indication information indicates that the second device supports acquisition of at least one of the first satellite coverage information or second satellite coverage information;
wherein the first satellite coverage information indicates at least one of: a satellite signal coverage condition of a satellite network currently accessed by a user equipment (UE) or a satellite signal coverage condition of at least one available satellite network;
the second satellite coverage information indicates: a satellite signal coverage condition of the UE.

20. The method according to claim 18 or 19, further comprising:
acquiring second indication information sent by the first device, wherein the second indication information indicates that the first device supports acquisition of at least one of the first satellite coverage information or second satellite coverage information, and the second indication information is configured for the second device to determine to acquire the first satellite coverage information or not to acquire the first satellite coverage information.

21. The method according to any one of claims 18 to 20, wherein the second satellite coverage information indicates a satellite coverage condition of the UE at a specified location.

22. The method according to any one of claims 18 to 21, wherein the second satellite coverage information comprises at least one of:
a time of satellite signal coverage to the UE;
a duration of satellite signal coverage to the UE;
a time of no satellite signal coverage to the UE; or
a duration of no satellite signal coverage to the UE.

23. The method according to any one of claims 18 to 22, further comprising:
acquiring the first satellite coverage information sent by a third device.

24. The method according to claim 23, further comprising:
sending the first satellite coverage information to the first device.

25. The method according to any one of claims 18 to 23 and 24, further comprising at least one of:
generating second satellite coverage information according to at least one of the first satellite coverage information, UE location information, or UE movement trajectory; or
acquiring second satellite coverage information sent by a third device.

26. The method according to any one of claims 18 to 22 and 25, further comprising:
generating management information according to the second satellite coverage information, wherein the management information is configured to manage the UE to maintain a power saving state when there is no satellite signal coverage and to maintain a network connection state during the satellite signal coverage.

27. The method according to claim 26, further comprising:
sending the management information to the first device.

28. The method according to any one of claims 18 to 27, wherein the first device is a network device, and the second device is a UE; or the first device is a UE, and the second device is a network device.

29. The method according to claim 27 or 28, wherein in response to the first device being a network device and the second device being a UE, after sending the management information to the first device, the method further comprises:
acquiring authorized management information sent by the first device.

30. The method according to any one of claims 19 to 22 and 25, wherein in response to the first device being a network device and the second device being a UE, the method further comprises:
sending the second satellite coverage information to the first device.

31. The method according to any one of claims 18 to 25 and 30, further comprising:
acquiring management information sent by the first device.

32. The method according to any one of claims 19 to 23, 25, 26, and 27, wherein in response to the first device being a network device and the second device being a UE, the method further comprises at least one of:
acquiring the first satellite coverage information sent by the first device; or
acquiring the second satellite coverage information sent by the first device.

33. The method according to claim 20, further comprising:
determining to acquire the first satellite coverage information or not to acquire the first satellite coverage information based on the second indication information.

34. The method according to claim 33, wherein determining to acquire the first satellite coverage information or not to acquire the first satellite coverage information based on the second indication information comprises:
determining to acquire the first satellite coverage information or not to acquire the first satellite coverage information based on the second indication information and a capability of the second device; wherein the capability of the second device comprises: a capability of the second device to acquire at least one of the first satellite coverage information or the second satellite coverage information.

35. The method according to any one of claims 19 to 22, 33, and 34, wherein in response to the first device being a network device and the second device being a UE, and in response to the second device generating management information and the second device acquiring management information sent by the first device, a usage priority of the management information sent by the first device is higher than a usage priority of the management information generated by the second device; or
in response to the first device being a UE and the second device being a network device, and in response to the second device generating management information and the second device acquiring management information sent by the first device, a usage priority of the management information generated by the second device is higher than a usage priority of the management information sent by the first device.

36. The method according to any one of claims 26, 27, 29, 31 and 35, wherein the management information comprises at least one of:
an extended discontinuous reception (eDRX) parameter in a connection management idle state (CM-IDLE);
a parameter for configuring a mobile initiated connection only (MICO) mode;
a parameter for configuring a power saving mode (PSM); or
a duration of a periodic registration timer.

37. A communication device, comprising:
a processing module, configured to: in response to acquiring first indication information from a second device, determine to acquire first satellite coverage information or not to acquire first satellite coverage information based on the first indication information; wherein the first indication information indicates that the second device supports acquisition of the first satellite coverage information.

38. A communication device, comprising:
a processing module, configured to send first indication information to a first device, wherein the first indication information indicates that a second device supports acquisition of first satellite coverage information, and the first indication information is configured for the first device to determine to acquire the first satellite coverage information or not acquire the first satellite coverage information.

39. A communication device, comprising a processor and a memory, wherein the memory has stored therein computer programs, and the processor is configured to execute the computer programs stored in the memory to cause the device to perform the method according to any one of claims 1 to 17, or the processor is configured to execute the computer programs stored in the memory to cause the device to perform the method according to any one of claims 18 to 36.

40. A communication device, comprising: a processor and an interface circuit,
wherein the interface circuit is configured to receive code instructions and transmit the code instructions to the processor; and
the processor is configured to run the code instructions to perform the method according to any one of claims 1 to 17, or to run the code instructions to perform the method according to any one of claims 18 to 36.

41. A computer-readable storage medium having stored therein instructions that, when executed, cause the method according to any one of claims 1 to 17 to be implemented, or cause the method according to any one of claims 18 to 36 to be implemented.
